(19) Europäisches Patentamt
European Patent Office
Office européen des brevets

(11) Publication number: **0 186 785 B1**

(12) **EUROPEAN PATENT SPECIFICATION**

(45) Date of publication of patent specification: **28.08.91**

(51) Int. Cl.5: **C08L 55/02**, C08L 51/04, C08L 25/08

(21) Application number: **85115024.3**

(22) Date of filing: **27.11.85**

The file contains technical information submitted after the application was filed and not included in this specification

(54) **Improved impact resistant polymeric compositions.**

(30) Priority: **30.11.84 US 676756**

(43) Date of publication of application: **09.07.86 Bulletin 86/28**

(45) Publication of the grant of the patent: **28.08.91 Bulletin 91/35**

(84) Designated Contracting States: **BE DE FR GB IT NL SE**

(56) References cited:
**FR-A- 2 268 833**
**US-A- 3 509 238**

(73) Proprietor: **THE DOW CHEMICAL COMPANY**
**2030 Dow Center Abbott Road P.O. Box 1967**
**Midland Michigan 48640-1967(US)**

(72) Inventor: **Moore, Eugene R.**
**5600 Woodview Pass**
**Midland, MI 48640(US)**
Inventor: **Janoch, Greg A.**
**505 McDonald Street**
**Midland, MI 48640(US)**
Inventor: **Hockstra, John R.**
**1407 Glendale**
**Midland, MI 48640(US)**

(74) Representative: **Sternagel, Hans-Günther, Dr. et al**
**Patentanwälte Dr. Michael Hann Dr. H.-G. Sternagel Sander Aue 30**
**W-5060 Bergisch Gladbach 2(DE)**

EP 0 186 785 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an impact resistant polymeric composition. Specifically, it relates to a blended composition containing two graft copolymers said graft copolymers having different degrees of grafting.

Impact resistant polymeric compositions are well-known in the prior art. Particularly well-known are those impact resistant polymeric compositions comprising a rubbery reinforcing polymer dispersed in a rigid phase polymeric composition. Exemplary of such impact resistant polymers are those containing styrene, acrylonitrile, and a reinforcing rubber. These impact-resistant compositions comprising styrene, acrylonitrile, and a reinforcing rubber are known in the art as ABS or ABS-type compositions.

These impact resistant compositions can be prepared in a variety of ways. One method of preparation is to polymerise styrene and acrylonitrile in the presence of rubber, for example, by a mass or bulk polymerization process, to obtain a rubber-reinforced styrene/acrylonitrile resin. Alternatively, said polymers can be produced by blending heat-plastified grafted reinforcing rubber with heat plastified styrene/acrylonitrile resins.

In view of the wide variety of end uses for the impact resistant polymeric compositions, it is advantageous to prepare such compositions in a manner in which the level of reinforcing rubber may be readily varied. The blending technique of preparing the impact resistant polymeric compositions is particularly desirable since it permits the amount of reinforcing rubber to be easily varied without adjusting complex polymerization conditions. Additionally, the blending technique allows the size and distribution of the rubber reinforcing particles to be easily varied.

It is also well-known in the art that the more rubber reinforcing polymer there is present in the composition the better the composition's impact resistance, and the lower the composition's gloss. Conversely, with a low level of rubber reinforcing polymer present in the composition the gloss of the composition is greatly improved but the impact resistance thereof is severely reduced.

U S -A- 3,509,238 teaches a polymeric composition comprising a blend of a rigid phase matrix and two grafted rubber copolymers wherein the grafted rubbery copolymers have different degrees of grafting. One of the grafted rubbery copolymers has a relatively low level of grafting while the other grafted rubbery copolymers has a relatively high level of grafting.

It would be desirable to produce a rubber-reinforced impact resistant polymeric composition having a good balance of gloss and impact resistance. That is, a composition possessing high gloss and good impact resistance.

This object is attained by the blended composition comprising:

(a) a matrix comprising an interpolymer, said interpolymer attainable by polymerization from a first monomer mixture comprising a monovinylidene aromatic monomer and one or more monomers copolymerizable therewith;

(b) a graftable rubber substrate of said first graft copolymer has grafted thereto a substantially continuous superstrate of an interpolymer, said interpolymer being obtainable by polymerization from a second monomer mixture comprising a monovinylidene aromatic monomer and one or more monomers copolymerizable therewith, and

(c) a graftable rubber substrate of said second graft copolymer has grafted thereto a substantially continuous superstrate of an interpolymer, said interpolymer being obtainable from a third monomer mixture comprising a monovinylidene aromatic monomer and one or more monomers copolymerizable therewith, wherein a second graft polymer having a higher amount of superstrate per square centimeter of substrate surface than the first graft copolymer characterized in that

said first graft copolymer having from above 0 to less than 0.7 x $10^{-7}$ gram of superstrate per square centimeter of substrate surface and the second graft copolymer having from above 0 to less than 7.0 x $10^{-7}$ gram of superstrate per square centimeter of substrate surface and which amount being different from at least 1.5 times greater than the amount of superstrate grafted to the graftable rubber substrate of the first graft copolymer.

The invention includes a process for preparing such a blended composition, the steps of the process comprising:

(a) polymerizing a first monomer mixture comprising a monovinylidenearomatic monomer and one or more monomers copolymerizable therewith to form a matrix of an interpolymer;

(b) forming a first graft copolymer having a graftable rubber substrate, said graftable rubber substrate having grafted thereto a substantially continuous superstrate of an interpolymer, said interpolymer being polymerized from a second monomer mixture comprising a monovinylidene aromatic monomer and one or more monomers copolymerizable therewith;

(c) forming a second graft copolymer having a graftable rubber substrate, said graftable rubber substrate having grafted thereto a substantially continuous superstrate of an interpolymer, said interpolymer being polymerized from a third monomer mixture comprising a monovinylidene

aromatic monomer and one or more monomers copolymerizable therewith, said second graft copolymer having a higher amount of superstrate per square centimeter of substrate surface than the first graft copolymer;

(d) blending the matrix, the first graft copolymer and the second graft copolymer to form a blended composition, characterized in that

said first graft copolymer having from above 0 to less than 0.7 x $10^{-7}$ gram of superstrate per square centimeter of substrate surface and the second graft copolymer having from above 0 to less than 7.0 x $10^{-7}$ gram of superstrate per square centimeter of substrate surface and which amount being at least 1.5 times greater than the amount of superstrate grafted to the graftable rubber substrate of the first graft copolymer.

The invention provides a polymer composition having a rigid matrix interpolymer blended therein, two different grafted rubbery copolymers having specifically defined degrees of grafting.

It has been discovered, contrary to the teachings contained in U S -A- 3,509,238, that a good combination of gloss and impact resistance can be obtained by blending into a rigid matrix phase two different grafted rubbery copolymers wherein the grafted rubbery copolymers have different degrees of grafting both possessing a relatively low degree of grafting.

Additionally, this relatively low level of grafting on both grafted rubbery copolymers allows for a higher level of productivity from the reactor used to produce them.

The compositions of the present invention are blended compositions comprising at least three different components. For clarity and ease of discussion, each of the three main components will be separately described.

## The Matrix

The matrix of the present invention consists mainly of an interpolymer of a monovinylidene aromatic monomer and one or more monomers copolymerizable therewith. The matrix generally comprises at least 60 percent by weight, based on total matrix weight, of the interpolymer, preferably 80 percent by weight, most preferably 96 percent by weight.

When the matrix does not comprise 100 weight percent of the interpolymer, the balance of the matrix can comprise (1) additional polymeric materials, and/or (2) other filler-type material combined with the interpolymer of the matrix, e.g., plasticizers, lubricants, pigments, fillers, and flame retardants.

Exemplary of the monovinylidene aromatic monomers suitable for use in the claimed invention are styrene; alpha-alkyl monovinylidene monoaromatic compounds (e.g., alpha-methylstyrene, alpha-ethylstyrene, alpha-methylvinyltoluene and, alpha-methyl dialkylstyrenes); ring-substituted alkyl styrenes (e.g., ortho-, meta-, and paravinyl toluene, o-ethylstyrene, p-ethylstyrene, 2,4-dimethylstyrene, and p-tertiarybutylstyrene); ring-substituted halostyrenes (e.g., o-chlorostyrene, p-chlorostyrene, o-bromostyrene, and 2,4-dichlorostyrene); ring-alkyl, ring-halo-substituted styrenes (e.g., 2-chloro-4-methyl styrene, and 2,6-dichloro-4-methylstyrene); vinyl naphthalene; and vinylanthracene. The alkyl substituents generally have one to four carbon atoms and may include isopropyl and isobutyl groups. If desired, mixtures of one or more such monovinylidene aromatic monomers may be used.

Exemplary of the monomers copolymerizable with the monovinylidene aromatic monomers are the unsaturated nitriles. Suitable unsaturated nitriles are acrylonitrile, methacrylonitrile, ethacrylonitrile, and mixtures thereof. The unsaturated nitrile is generally present in the interpolymer of the matrix in an amount of from 5 to 50, preferably, from 15 to 35 weight percent based on total weight of the interpolymer of the matrix.

Other monomers copolymerizable with the monovinylidene aromatic monomer and suitable for use in the interpolymer of the matrix are the conjugated 1,3-dienes (e.g., butadiene, and isoprene); alpha- or beta-unsaturated monobasic acids and derivatives thereof (e.g., acrylic acid, methyl acrylic acid, ethyl acrylate, butyl acrylate, 2-ethylhexyl acrylate, methacrylic acid, and the corresponding esters thereof such as methyl methacrylate, acrylamide, methacrylamide); vinyl halides such as vinyl chloride, and vinyl bromide; vinylidene chloride, and vinylidene bromide; vinyl esters such as vinyl acetate, and vinylpropionate.; dialkyl maleate or fumarates such as dimethyl maleate, diethyl maleate; dibutyl maleate, and the corresponding fumarates.

The preferred monomers copolymerizable with the monovinylidene aromatic monomer of the interpolymer of the matrix are acrylonitrile and methyl methacrylate.

The interpolymer of the matrix and the interpolymer graft to the first and second graft copolymers may have the same or different composition. If the interpolymers have different compositions, they must be compatible. For the purposes of this invention, the interpolymer of the matrix and the interpolymer graft to the first and second graft copolymers are considered compatible if, assuming different glass transition temperatures, a blend of the interpolymers would displace the glass transition temperature of the interpolymer of the matrix. Preferentially, a blend of the interpolymer graft to the first and second graft copolymers and a compatible interpolymer of the matrix exhibits a single glass transition temperature.

Techniques suitable for producing the interpolymers of the matrix are well-known in the art. Examples of the known polymerization processes include mass, mass-solution, mass-suspension, suspension, and emulsion polymerisation processes as well as other modifications and/or combinations of such processes. See, for example, U S -A- 3,509,237; 3,928,494; 4,221,883; 4,239,863; 4,243,765; and 4,250,271.

The interpolymer of the matrix may be produced in a reaction separate from the production of the first and second graft copolymers or, as is well-known in the art, all or part of the interpolymer of the matrix can be formed in the reaction used to produce the first and second graft copolymers. In most instances, the reaction used to produce the first and second graft copolymers inherently produces at least a small amount of the interpolymer of the matrix.

## The First Graft Copolymer

The first graft copolymer of the present invention has a graftable rubber substrate, said graftable rubber substrate having grafted thereto a superstrate interpolymer. The graftable rubber substrate of the present invention is prepared from a monomer mixture which comprises a major portion of generally hydrophobic monomers.

The graftable rubber substrates are suitably prepared in a manner which provides the graftable rubber substrates with a thin hydrophilic outer layer. This thin hydrophilic outer layer being sufficient to encourage the subsequent substantially continuous, generally uniform grafting of superstrate interpolymer thereto.

Suitably, the graftable rubber substrate of the present invention is polymerised from first and second generally hydrophobic monomer mixtures.

A first generally hydrophobic monomer mixture is prepared, said monomer mixture comprising a monovinylidene aromatic monomer, a conjugated diolefin, and an ethylenically unsaturated nitrile monomer.

The term "monovinylidene aromatic monomer" includes those monomers wherein a radical of the formula

$$CH=\overset{\overset{R}{|}}{C}-$$

(wherein R is hydrogen or a lower alkyl such as an alkyl having from 1 to 4 carbon atoms) is attached directly to an aromatic nucleus containing from 6 to 10 carbon atoms, including those wherein the aromatic nucleus is substitued with alkyl or halogen substituents. Typical of these monomers are styrene; alpha-methylstyrene; ortho-, meta-, and para-ethylstyrene; o,p-dimethylstyrene; o,p-diethylstyrene; isopropylstyrene; o-methyl-p-isopropylstyrene; p-chlorostyrene; p-bromostyrene; o,p-dichlorostyrene; o,p-dibromostyrene; vinylnaphthalene, diverse vinyl (alkylnaphthalenes); and vinyl (halonaphthalenes); and comonomeric mixtures thereof.

Because of considerations such as cost, availability, and ease of use, styrene is the preferred monovinylidene aromatic monomer. The monovinylidene aromatic monomer constitutes from above 0 to 40, preferably from above 0 to 15 weight percent of the first generally hydrophobic monomer mixtures.

The term "conjugated diolefin" is meant to include 1,3-butadiene; 2-methyl-1,3-butadiene; 1,3-dimethyl-1,3-butadiene; pentadiene; 2-neopentyl-1,3-butadiene; and other hydrocarbon analogs of 1,3-butadiene; and, in addition, the substituted 1,3-butadienes, such as 2-chloro-1,3-butadiene; 2-cyano-1,3-butadiene the substituted straight chain conjugated pentadienes; the straight chain and branch chain conjugated hexadienes; other straight and branched chain conjugated dienes having from 4 to 9 carbon atoms, and comonomeric mixtures thereof.

The cost, ready availability, and excellent properties of interpolymers produced therefrom, makes 1,3-butadiene the most preferred conjugated diolefin for use in the present invention. The conjugated diolefin constitutes from 50 to 100, preferably, from 70 to 100, and most preferably from 85 to 96 weight percent of the first generally hydrophobic monomer mixture.

The term "ethylenically unsaturated nitrile monomer" includes, acrylonitrile, methacrylonitrile, ethacrylonitrile and the like, and mixtures thereof. The ethylenically unsaturated nitrile monomer is present in an amount of from above 0 to 15 weight percent, preferably from above 0 to 5 weight percent of the first generally hydrophobic monomer mixtures. The cost, and ready availability, make acrylonitrile the most preferred ethylenically unsaturated nitrile monomer for use in the present invention.

The monomers of the first generally hydrophobic monomer mixture are emulsified in water with the aid of a micelle-forming emulsifying agent. The resultant aqueous suspension usually contains a suitable water-soluble free radical generating initiator such as a peroxide or a persulfate. Additionally, a modifier or regulator, such as a mercaptan,

may be present in small amounts. The modifier acts as a chain transfer agent and limits the growth of the polymer chain.

Suitable emulsifying agents which can be employed in the practice of the present invention include anionic, cationic and non-ionic emulsifiers customarily used in emulsion polymerisation. Usually at least one anionic emulsifier is included and one or more non-ionic emulsifiers can also be present.

Representative types of anionic emulsifiers are the alkylaryl sulfonates, alkali metal alkyl sulfates, and sulfonated alkyl esters, and the fatty acid soaps. Specific examples of these well-known emulsifiers include dodecylbenzene sodium sulfonate, sodium butylnaphthalene sulfonate, sodium lauryl sulfate, disodium dodecyl diphenyl ether disulfonate, N-octadecyl disodium sulfosuccinate, and dioctyl sodium sulfosuccinate.

The emulsifying agents can be employed in varying amounts so long as adequate emulsification is achieved to provide graftable rubber substrates of the desired size and size distribution. As a general rule, the emulsifying agents are present in an amount of from 0.02 to 6.0 weight percent, preferably from 0.4 to 4.0 weight percent, based on total monomer to be polymerized.

Molecular weight modifiers may be employed in the polymerization step of the present invention. The molecular weight modifiers are present in an amount of from 0 percent to 5.0 percent by weight, preferably from 0.1 to 1.0 percent by weight, based upon the total weight of monomer to be polymerized.

Suitable molecular weight modifiers include n-octyl mercaptan, cyclohexyl mercaptan, dipentene dimercaptan, n-butyl mercaptan, n-dodecyl mercaptan, tertiary dodecyl mercaptan, isooctyl thioglycolate, penanyl mercaptan, pentaerithritoltetra(3-mercaptopropionate), ethyl cyclohexyl dimercaptan, allyl bromide, carbontetrachloride, bromotrichloromethane, and beta-bromostyrene. Other suitable molecular modifiers include: methyl mercaptan, ethyl mercaptan, 1-propyl mercaptan, 2-propyl mercaptan, 1-butyl mercaptan, 2-butyl mercaptan, 1-pentyl mercaptan, 2-pentyl mercaptan, 3-pentyl mercaptan, 1-hexyl mercaptan, 1-heptyl mercaptan, tertiary nonyl mercaptan, secondary dodecyl mercaptan and terpenes such as terpinolene and limonene and mixtures of the foregoing regulators.

Suitable free-radical generating initiators or catalysts include water-soluble persulfate or peroxy compounds and water-soluble redox systems, preferably potassium, sodium or ammonium peroxydisulfate, or hydrogen peroxide, in combination with a reducing agent, such as sodium metabisulphite, sodium thiosulfate, sodium bisulfite, sodium formaldehyde sulfoxylate, sodium dithionite, sodium hypophosphite, ferrous sulfate, ferrous nitrate, and water-soluble amines, for example, triethylamine and triethanolamine, which act as an accelerator. The preferred water-soluble persulfate compound is sodium or potassium persulfate. Oil soluble initiators such as cumene hydroperoxide, azobisisobutyronitrile, tertiary butyl hydroperoxide, paramethane hydroperoxide; and benzoyl peroxide may be used.

The amount of free-radical generating initiator or catalyst used is within the limits considered normal for polymerization reactions of this type, i.e., between 0.01 and 5 weight percent, preferably from 0.02 to 2.0 weight percent based on the total monomer to be polymerized.

Finally, the first generally hydrophobic monomer mixture may contain other modifiers, including plasticizers, stabilizers, lubricants, dyes, pigments, and fillers, provided they do not chemically react with or otherwise adversely affect the ingredients of the first or second generally hydrophobic monomer mixtures.

An amount of hydrophilic monomer is added to the aqueous suspension. Suitable hydrophilic monomers include: acrylonitrile, methacrylonitrile, and methyl methacrylate. The preferred hydrophilic monomer is acrylonitrile.

The hydrophilic monomer is added in an amount sufficient to provide a generally hydrophilic surface on a polymer to be prepared from the monomers present in the aqueous suspension. Suitably, the hydrophilic monomer is added in an amount of from 0.1 to 5 weight percent based on total weight of the aqueous phase and the first generally hydrophobic monomer mixture. In one preferred embodiment of the present invention wherein the hydrophillic monomer is acrylonitrile, the acrylonitrile is present in an amount of from 0.2 to 2.3 weight percent based on total weight of the aqueous phase and the first generally hydrophobic monomer mixture.

Polymerization of the monomers present in the aqueous suspension is then initiated to form an aqueous suspension of partially polymerized monomers. Polymerization is carried out under suitable conditions such as, for example, from 0 °C to 120 °C, preferably from 50 °C to 110 °C and autogenous pressure. The aqueous suspension of partially polymerized monomers may be stabilized and stored for future use, or they may be used immediately in forming the graftable rubber substrates.

A second generally hydrophobic monomer mixture is provided. The second generally hydrophobic monomer mixture comprises a monovinylidene aromatic monomer, a conjugated diolefin, and an ethylenically unsaturated nitrile monomer.

The monovinylidene aromatic monomers suitable for use in the second generally hydrophobic monomer mixture are the same as those hereinbefore set forth as suitable for use in the first generally hydrophobic monomer mixture. The conjugated diolefins suitable for use in the second generally hydrophobic monomer mixture are the same as those hereinbefore set forth as suitable for use in the first generally hydrophobic monomer mixture. The ethylenically unsaturated nitrile monomers suitable for use in the second generally hydrophobic monomer mixture are the same as those hereinbefore set forth as suitable for use in the first generally hydrophobic monomer mixture.

The monovinylidene aromatic monomer is present in the second generally hydrophobic monomer mixture in an amount of from above 0 to 40, preferably from above 0 to 15 weight percent based on total weight of the second generally hydrophobic monomer mixture. The conjugated diolefin monomer mixture in an amount of from 50 to 100, preferably from 70 to 100, and most preferably from 85 to 96 weight percent based on total weight of the second generally hydrophobic monomer mixture. The ethylenically unsaturated nitrile monomer is present in the second generally hydrophobic monomer mixture in an amount of from above 0 to 15, preferably from above 0 to 5 weight percent based on total weight of the second generally hydrophobic monomer mixture.

Additionally, the second generally hydrophobic monomer mixture may contain additives, e.g., free radical generating catalyst or initiators, molecular weight modifiers or regulators, and the like, as hereinbefore set forth as suitable for inclusion in the first generally hydrophobic monomer mixture.

The second generally hydrophobic monomer mixture is added to the aqueous suspension of partially polymerized monomers. For ease of controlling the polymerization rate, it is preferred that the second generally hydrophobic monomer mixture be added to the aqueous suspenstion of partially polymerized monomers gradually over a length of time. The length of time over which the second generally hydrophobic monomer mixture is added to the aqueous suspension of partially polymerized monomers is suitably from 1 to 24 hours.

In one preferred embodiment of the present invention, the first generally hydrophobic monomer mixture and the second generally hydrophobic monomer mixture are nearly identical in composition. Moreover, the first generally hydrophobic monomer mixture represents from above 0 to 25, preferably from above 0 to 15 weight percent of the total combined weight of the first and second generally hydrophobic monomer mixture.

In another preferred embodiment of the present invention a single generally hydrophobic monomer mixture is provided, said mixture comprising a monovinylidene aromatic monomer, a conjugated diolefin, and an ethylenically unsaturated nitrile monomer. The single generally hydrophobic monomer mxiture is then divided into a first portion and a second portion, said first portion being the functional equivalent of the first generally hydrophobic monomer mixture, said second portion being the functional equivalent of the second generally hydrophobic monomer mixture.

In some embodiments of the present invention the first and/or second generally hydrophobic monomer mixtures contain seed particles. The use of such seed particles is well-known by those skilled in the art. The seed particles allow for more precise control of the particle size of the graftable rubber substrate. Typically, such seed particles have a diameter of 500 x $10^{-10}$m (500 Angstroms) or less and comprise any material capable of nucleating the formation of the graftable rubber substrates with the further limitation that the material comprising the seed particle not chemically interfere with the reaction used to form the graftable rubber substrates.

The graftable rubber substrate is prepared by continuing polymerization of the monomers present in the aqueous suspension of the partially polymerized monomers until achieving a conversion of monomer to polymer of at least 50 percent. The unreacted monomers, optionally, may be removed from the aqueous suspension of partially polymerized monomers prior to the graft polymerization step by any of the conventional monomer removal methods.

This method of forming the graftable rubber substrate is preferred because it is quick and efficient and produces a graftable rubber substrate capable of having grafted thereto a substantially continuous, generally uniform layer of superstrate. It is understood that any method of forming a graftable rubber substrate capable of having grafted thereto a substantially continuous, generally uniform layer of superstrate is suitable for use in the present invention.

Additionally, while less desirable compositions could be expected to result, it should be possible to utilize any method of forming the graftable rubber substrate. This is true even if the superstrate grafted thereto does not form a substantially continuous, generally uniform layer.

The graftable rubber substrates have diameters ranging in size from 300 x $10^{-10}$m to 5000 x $10^{-10}$m, preferably from 800 x $10^{-10}$ to 2000 x $10^{-10}$m (300 to 5,000 preferably from 800 to 2,000 Angstroms); the foregoing values being number average values.

The graftable rubber substrates are then subjected to a graft polymerization step wherein a substantially continuous superstrate of an interpolymer is grafted to the graftable rubber substrate. The interpolymer graft to the graftable rubber substrate is polymerized from a monomer mixture comprising a monovinylidene aromatic monomer and one or more monomers copolymerizable therewith.

The monovinylidene aromatic monomers suitable for graft polymerization to the graftable rubber substrates are the same as those hereinbefore described as being suitable for inclusion in the first generally hydrophobic monomer mixture. The monomers copolymerizable with the monovinylidene aromatic monomers include the ethylenically unsaturated nitrile monomers and the monoethylenically unsaturated esters of carboxylic acid monomers.

Exemplary of the ethylenically unsaturated nitrile monomers suitable for copolymerization with the monovinylidene aromatic monomers are the ethylenically unsaturated nitrile monomers hereinbefore described as being suitable for inclusion in the first generally hydrophobic monomer mixture. The preferred ethylenically unsaturated nitrile monomer is acrylonitrile.

Exemplary of the ethylenically unsaturated esters of carboxylic acid monomers suitable for copolymerization with the monovinylidene aromatic monomers are methylacrylate, methyl methacrylate, ethylacrylate, ethyl methacrylate, 2-chloroethyl methacrylate, propyl acrylate or methacrylate, n-butyl acrylate or methacrylate, and 2-ethyl hexyl acrylate. For reasons of cost and ease of use of the preferred ethylenically unsaturated carboxylic acid monomer is methyl methacrylate.

The graftable rubber substrates are grafted with the interpolymer by techniques well-known in the art. Preferred are techniques which favor the formation of a rigid thermoplastic polymer shell around the graftable rubber substrates rather than discrete particles of interpolymer separate from the graftable rubber substrates. Typcially, the monomers from which the interpolymer is polymerized are polymerized in the presence of an emulsion of the graftable rubber substrates.

The graft polymerization process in which the interpolymer is grafted to the graftable rubber substrate is allowed to continue until the graftable rubber substrate has grafted thereto from above 0 to less than 0.7 x $10^{-7}$ gram of superstrate per square centimeter of graftable rubber substrate surface.

## The Second Graft Copolymer

The second graft copolymer is prepared in the same manner and from the same materials as those used to produce the first graft copolymer. The sole distinction between the first graft copolymer and the second graft copolymer being in the amount of interpolymer grafted to the graftable rubber substrate. In all instances, the amount of superstrate grafted copolymer is different than the amount of superstrate grafted to the graftable rubber substrate of the first graft copolymer.

In forming the second graft copolymer, the graft polymeriztion step is suitably allowed to continue from above 0 to less than 7.0 x $10^{-7}$ gram of interpolymer per square centimeter of graftable rubber substrate surface has been graft polymerized onto the graftable rubber substrate, and which amount is at least 1.5 times the amount of superstrate grafted to the graftable rubber substrate of the first graft copolymer.

## The Blend

The first and second graft copolymers should be blended as latexes in order to achieve an adequate degree of mixing. The blend of latexes is then recovered according to conventional means. The recovered particles are then blended with the matrix. Suitably, the recovered particles and the matrix are extrusion blended or mill rolled to form the compositions of the present invention.

The matrix is present in the blended composition in an amount of from 60 to 95 weight percent, preferably from 70 to 90 weight percent based on total weight of the blended composition. The first graft copolymer is present in the blended composition in an amount of from 15 to 65 weight percent, preferably from 20 to 55 weight percent, based on total weight of the first and second graft copolymers. The second graft copolymer is present in the blended composition in an amount of from 35 to 85 weight percent, preferably from 45 to 80 weight percent based on total weight of the first and second graft copolymers. As a general rule, the first and second graft copolymers are present in the blended composition in an amount such that the blended composition contains graftable rubber substrate in an amount of from 5 to 40, preferably from 10 to 30 weight percent, based on total weight of the blended composition.

Generally, it is desired that the first and second graft copolymer particles present in the blended composition of the present invention have a broad particle size distribution. That is, that some of the copolymer particles have a relatively small particle diameter while some of the particles have a relatively large particle diameter. This broad particle size distribution has been found to produce a blended composition having excellent toughness.

The small particles are easily produced by the process used to form the first and second graft copolymers. In other words, the process hereinbefore set forth for producing the first and second

graft copolymers naturally produces graft copolymer particles having a relatively small particle diameter. These relatively small copolymer particles have diameters of from 300 x $10^{-10}$ to 5,000 x $10^{-10}$m, preferably from 800 x $10^{-10}$ to 2,000 x $10^{-10}$m.

The graft copolymer particles having a relatively large particle diameter are formed through a process of melt agglomeration. For the purposes of this invention, the term melt agglomeration refers to a process in which the graft copolymer particles having a relatively small particle diameter are subjected to mechanical shear while in a heat plastified state which causes said particles to agglomerate into particles having a relatively large particle diameter. This mechanical shearing while in a heat plastified state is efficiently and economically performed in a conventional melt processing step, such as extrusion or roll milling.

The melt agglomeration process suitably causes an impact-resistance-imparting amount of the first and second graft copolymer particles to agglomerate into particles having a relatively large particle diameter. The graft copolymer particles having a relatively large particle diameter suitably have a particle diameter of from 5,000 x $10^{-10}$ to 100,000 x $10^{-10}$m (Angstroms), preferably from 8,000 x $10^{-10}$ to 40,000 x $10^{-10}$m (Angstroms).

The compositions of the present invention are capable of being compounded with other compositions. Those skilled in the art will recognize the desirability of forming such compounded compositions. Exemplary of such a compounded composition is a blend formed from a composition according to the present invention and an ABS resin, said resin having been produced in a mass, mass-suspension, or mass-solution type process.

The following examples are intended as illustrations only, and are not to limit, in any manner, the invention as set forth in the claims.

All of the following examples employ the same graftable rubber substrate. The graftable rubber substrate employed was prepared in the following manner.

A 0.757 $m^3$ (200 gallon) glass-lined jacketed reactor was charged with 445.39 kilograms of deionized water, 1332.97 grams of a 43 percent solution of sodium dodecylbenzenesulfonate, 318.13 grams of sodium bicarbonate, and 203.60 grams of a 46 percent solution of ethylene diamine tetraacetic acid. The reactor was sealed and tested for leaks at 30°C. The reactor was purged of oxygen by pressurizing said reactor with nitrogen to about 413.68 kPa (60 psig) and then evacuating the nitrogen to a vacuum of about 200 mbar (150 mm Hg).

The process of pressurizing the reactor with nitrogen and evacuating was performed a total of three times.

After purging the reactor of oxygen, 4.63 kilograms of acrylonitrile were added to the reactor. Immediately after the addition of the acrylonitrile, 47.86 kilograms of a monomer mixture were added to the reactor. The monomer mixture comprised 4.9 parts styrene, 0.3 parts normal octyl mercaptan, 2.1 parts acrylonitrile, and 93.0 parts butadiene, all parts being per hundred parts monomer. To the reactor was then added an initiator shot comprising 636.26 grams of sodium persulfate dissolved in 636.26 grams of deionized water.

The temperature of the reactor was increased to approximately 65°C over a period of about one-half hour. A pressure drop of 68.95 kPa (10 psi) indicated initiation of the polymerization reaction. At this time, 271.45 kilograms of a monomer mixture were continuously added to the reactor at a rate of 54.29 kilograms per hour. The monomer mixture comprised 4.9 parts styrene, 0.3 N-octyl mercaptan, 2.1 parts acrylonitrile and 93 parts butadiene, all parts being per one hundred parts monomer. At the same time the monomer mixture was being continuously added to the reactor, an aqueous mixture was being added to the reactor. The aqueous mixture was added to the reactor at a rate of 13.07 kilograms per hour until 78.42 kilograms of the aqueous mixture had been added to the reactor. The aqueous mixture comprised 74.67 kilograms of deionized water and 17.36 kilograms of a 43 percent solution of sodium dodecylbenzenesulfonate.

The reaction was allowed to continue until the butadiene pressure within the reactor decreased to about 137.90 kPa (20 psig). At this time, the contents of the reactor were steam stripped to remove the unreacted monomer.

Example 1

The latex of graftable rubber substrate produced in the above described manner was then grafted. To a 0.757 $m^3$ (200 gallon) glass-lined reactor was added 787.19 kilograms of the graftable rubber substrate latex produced above. The latex of graftable rubber substrate had a solids content of 39.1 percent by weight. A solution of 100 grams of sodium persulfate and 500 grams of deionized water was added to the reactor with the latex of graftable rubber substrate. The reactor was pressurized to 68.95 kPa (10 psig) with nitrogen and heated to about 70°C.

To the reactor was then added 12.35 kilograms of a first monomer feed stream. The first monomer feed stream comprised 69.25 weight percent styrene, 30.75 weight percent acrylonitrile, based on total weight of the first monomer feed stream, and 0.014 parts per one hundred parts monomer of normal octyl mercaptan. The first monomer feed

stream was continuously added to the reactor at a rate of 61.77 kilograms per hour. At the same time the first monomer feed stream was being continuously added to the reactor, an aqueous feed stream was being added to the reactor. The aqueous feed stream was added to the reactor at a rate of 68.7 kilograms per hour until 13.74 kilograms of the aqueous feed stream had been added. The aqueous feed stream comprised 13.42 kilograms deionized water, 0.012 kilograms of sodium persulfate, and 0.308 kilograms of a 43 percent solution of sodium dodecylbenzenesulfonate.

After the first monomer feed stream and aqueous feed stream had been added to the reactor, the reaction was allowed to continue for one hour at 70 °C. At this time, 169.65 kilograms of the latex contained in the reactor was removed from the reactor. The latex removed from the reactor was steam stripped of residual monomers and stabilized. This latex was found to have grafted thereto 0.291 x $10^{-7}$ grams of superstrate per square centimeter of substrate surface.

To the material remaining in the reactor, after the removal of the 169.65 kilograms of latex, was added a second monomer feed stream. The second monomer feed stream comprised 69.25 weight percent styrene, 30.75 weight percent acrylonitrile, based on total monomer weight of the second monomer feed stream, and 0.021 parts per hundred parts monomer of normal octyl mercaptan. The second monomer feed stream was added to the reactor at a rate of 48.85 kilograms per hour until a total of 14.66 kilograms of the second monomer feed stream had been added.

At the same time the second monomer feed stream was being continuously added to the reactor, a second aqueous feed stream was being added to the reactor. The second aqueous feed stream was added to the reactor at a rate of 54.33 kilograms per hour until a total of 16.30 kilograms of the second aqueous feed stream had been added.

After the second monomer feed stream and the second aqueous feed stream had been added to the reactor the reaction was allowed to continue for one hour at a temperature of 70 °C. At this time, 146.51 kilograms of the latex contained in the reactor was removed from the reactor. The latex removed from the reactor was steam stripped of residual monomers and stabilized. This latex was found to have grafted thereto 1.22 x $10^{-7}$ grams of superstrate per square centimeter of substrate surface.

To the material remaining in the reactor, after the removal of the 146.51 kilograms of latex, was added a third monomer feed stream. The third monomer feed stream comprised 69.25 weight percent styrene, 30.75 weight percent acrylonitrile, based on total weight of the third monomer feed stream, and 0.105 parts per hundred parts monomer of normal octyl mercaptan. The third monomer feed stream was added to the reactor at a rate of 38.92 kilograms per hour until a total of 57.43 kilograms had been added.

At the same time the third monomer feed stream was being continuously added to the reactor, a third aqueous feed stream was being added to the reactor. The third aqueous feed stream was added to the reactor at a rate of 42.69 kilograms per hour until 64.03 kilograms had been added. The third aqueous feed stream comprised 62.54 kilograms of deionized water, 0.057 kilograms of sodium persulfate, and 1.433 kilograms of a 43 percent aqueous solution of sodium dodecylbenzenesulfonate.

After the addition of the third monomer feed stream and the third aqueous feed stream the reaction was allowed to continue for one hour at a temperature of 70 °C. After one hour 186.43 kilograms of the material in the reactor was removed from the reactor. The latex removed from the reactor was steam stripped of residual monomers and stabilized. This latex was found to have grafted thereto 5.57 x $10^{-7}$ grams of superstrate per square centimeter of substrate surface.

A blended composition was then prepared by blending a first and second graft copolymer with a matrix. The matrix comprised an interpolymer of styrene and acrylonitrile. The interpolymer comprised 72 weight percent styrene and 28 weight percent acrylonitrile based on total interpolymer weight. The blend was prepared by melt blending, in an extruder, the matrix, the first graft copolymer, and the second graft copolymer.

## Claims

**1.** A blended composition comprising

(a) a matrix comprising an interpolymer, said interpolymer attainable by polymerization from a first monomer mixture comprising a monovinylidene aromatic monomer and one or more monomers copolymerizable therewith;

(b) a graftable rubber substrate of said first graft copolymer having grafted thereto a substantially continuous superstrate of an interpolymer, said interpolymer being obtainable by polymerization from a second monomer mixture comprising a monovinylidene aromatic monomer and one or more monomers copolymerizable therewith, and

(c) a graftable rubber substrate of said second graft copolymer having grafted thereto a substantially continuous superstrate of an

interpolymer, said interpolymer being obtainable from a third monomer mixture comprising a monovinylidene aromatic monomer and one or more monomers copolymerizable therewith, wherein a second graft polymer having a higher amount of superstrate per square centimeter of substrate surface than the first graft copolymer

**characterized in**

that said first graft copolymer having from above 0 to less than 0.7 x $10^{-7}$ gram of superstrate per square centimeter of substrate surface and the second graft copolymer having from above 0 to less than 7.0 x $10^{-7}$ gram of superstrate per square centimeter of substrate surface and which amount being at least 1.5 times greater than the amount of superstrate grafted to the graftable rubber substrate of the first graft copolymer.

**2.** The composition of claim 1 wherein the monovinylidene aromatic monomer of the first, second and third monomer mixture is styrene.

**3.** The composition of claim 1 wherein the first, second and third monomer mixtures comprise a monovinylidene aromatic monomer and one or more monomers copolymerizable therewith, wherein said copolymerizable monomers are selected from the group consisting of acrylonitrile, and methylacrylate.

**4.** The composition of claim 1, wherein the graftable rubber substrate of the first and second graft copolymer is polymerized from a monovinylidene aromatic monomer, a conjugated diolefin monomer, and an ethylenically unsaturated nitrile monomer.

**5.** The composition of claim 4, wherein the monovinylidene aromatic monomer is styrene, the conjugated diolefin monomer is 1,3-butadiene, and the ethylenically unsaturated nitrile monomer is acrylonitrile.

**6.** A process for preparing a blended composition according to claim 1, the steps of the process comprising:

(a) polymerizing a first monomer mixture comprising a monovinylidenearomatic monomer and one or more monomers copolymerizable therewith to form a matrix of an interpolymer;

(b) forming a first graft copolymer having a graftable rubber substrate, said graftable rubber substrate having grafted thereto a substantially continuous superstrate of an interpolymer, said interpolymer being polymerized from a second monomer mixture comprising monovinylidene aromatic monomer and one or more monomers copolymerizable therewith;

(c) forming a second graft copolymer having a graftable rubber substrate, said graftable rubber substrate having grafted thereto a substantially continuous superstrate of an interpolymer, said interpolymer being polymerized from a third monomer mixture comprising a monovinylidene aromatic monomer and one or more monomers copolymerizable therewith, said second graft copolymer having a higher amount of superstrate per square centimeter of substrate surface than the first graft copolymer;

(d) blending the matrix, the first graft copolymer and the second graft copolymer to form a blended composition,

**characterized in**

that said first graft copolymer having from above 0 to less than 0.7 x $10^{-7}$ gram of superstrate per square centimeter of substrate surface and the second graft copolymer having from above 0 to less than 7.0 x $10^{-7}$ gram of superstrate per square centimeter of substrate surface and which amount being at least 1.5 times greater than the amount of superstrate grafted to the graftable rubber substrate of the first graft copolymer.

**7.** The process of claim 6, wherein the monovinylidene aromatic monomer of the first, second, and third monomer mixtures is styrene.

**8.** The process of claim 6, wherein the monovinylidene aromatic monomer of the first, second and third monomer mixtures comprise styrene and one or more monomers copolymerizable therewith, said copolymerizable monomers being selected from the group consisting of acrylonitrile, methyl methacrylate.

**9.** The process of claim 6, wherein the graftable rubber substrate of the first and second graft copolymers is polymerized from a monovinylidene aromatic monomer, a conjugated diolefin monomer and an ethylenically unsaturated nitrile monomer.

**10.** The process of claim 9, wherein the monovinylidene aromatic monomer is styrene, the conjugated diolefin monomer is 1,3-butadiene, and the ethylenically unsaturated nitrile monomer is acrylonitrile.

**11.** The process of claim 6 to 10, wherein the blended composition in the matrix is present in

an amount of from 60 to 95 weight percent, preferably from 70 to 90 weight percent, based on total weight of the blended composition and in which the first graft copolymer is present in an amount of from 20 to 55 weight percent, based on total weight of the first and second graft copolymers, and in which the second graft copolymer is present in an amount of from 35 to 85 weight percent, preferably form 45 to 80 weight percent, based on total weight of the first and second graft copolymers, and in which the blended composition contains graftable rubber substrate in an amount of from 5 to 40, preferably from 10 to 30 weight percent, based on total weight of the blended composition is processed with a mechanical shear while in a heat plastified state leading to a broad particle size distribution containing small copolymer particles having diameters of from 0.03 to 0.5 pm (300 to 5,000 Å), preferably from 0.08 to 0.2 μm (800 to 2,000 Å) graft copolymer particles having a large particle diameter of from 0.5 to 10 μm (5,000 to 100,000 Å), preferably form 0.8 to 0.2 μm (8,000 to 40,000 Å).

## Revendications

1. Composition mélangée comprenant :
   (a) une matrice comprenant un interpolymère, ledit interpolymère pouvant être obtenu par polymérisation à partir d'un premier mélange de monomères comprenant un monomère monovinylidène aromatique et un ou plusieurs monomères copolymérisables avec lui ;
   (b) à un substrat de caoutchouc greffable dudit premier copolymère greffé, étant greffée une couche supérieure sensiblement continue d'un interpolymère, ledit interpolymère pouvant être obtenu par polymérisation à partir d'un deuxième mélange de monomères comprenant un monomère monovinylidene aromatique et un ou plusieurs monomères copolymérisables avec lui ; et
   (c) à un substrat de caoutchouc greffable dudit deuxième copolymère greffé, étant greffée une couche supérieure sensiblement continue d'un interpolymère, ledit interpolymère pouvant être obtenu à partir d'un troisième mélange de monomères comprenant un monomère monovinylidène aromatique et un ou plusieurs monomères copolymérisables avec lui, ledit deuxième polymère greffé ayant une quantité de couche supérieure par centimètre carré de surface de substrat plus grande que le premier copolymère greffé,
   caractérisée par le fait que ledit premier copolymère greffé a de plus de 0 à moins de 0,7 x $10^{-7}$ gramme de couche supérieure par centimètre carré de surface de substrat et le deuxième copolymère greffé a de plus de 0 à moins de 7,0 x $10^{-7}$ gramme de couche supérieure par centimètre carré de surface de substrat, et que cette quantité est d'au moins 1,5 fois plus grande que la quantité de couche supérieure greffée au substrat de caoutchouc greffable du premier copolymère greffé.

2. Composition selon la revendication 1, dans laquelle le monomère monovinylidène aromatique des premier, deuxième et troisième mélanges de monomères est le styrène.

3. composition selon la revendication 1, dans laquelle les premier, deuxième et troisième mélanges de monomères comprennent un monomère monovinylidène aromatique et un ou plusieurs monomères copolymérisables avec lui, lesdits monomères copolymérisables étant choisis dans le groupe constitué par l'acrylonitrile et l'acrylate de méthyle.

4. composition selon la revendication 1, dans laquelle le substrat de caoutchouc greffable des premier et deuxième copolymères greffés est polymérisé à partir d'un monomère monovinylidène aromatique, d'une dioléfine conjuguée monomère, et d'un nitrile à insaturation éthylénique monomère.

5. composition selon la revendication 4, dans laquelle le monomère monovinylidène aromatique est le styrène, la dioléfine conjuguée monomère est le butadiène-1,3, et le nitrile à insaturation éthylénique monomère est l'acrylonitrile.

6. Procédé de fabrication d'une composition mélangée selon la revendication 1, le procédé comprenant les étapes consistant à :
   (a) polymériser un premier mélange de monomères comprenant un monomère monovinylidène aromatique et un ou plusieurs monomères copolymérisables avec lui, pour former une matrice d'un interpolymère ;
   (b) former un premier copolymère greffé ayant un substrat de caoutchouc greffable, une couche supérieure sensiblement continue d'un interpolymère étant greffée audit substrat de caoutchouc greffable, ledit interpolymère étant polymérisé à partir d'un deuxième mélange de monomères comprenant un monomère monovinylidène aromatique et un ou plusieurs monomères copolymérisables avec lui ;

(c) former un deuxième copolymère greffé ayant un substrat de caoutchouc greffable, une couche supérieure sensiblement continue d'un interpolymère étant greffée audit substrat de caoutchouc greffable, ledit interpolymère étant polymérisé à partir d'un troisième mélange de monomères comprenant un monomère monovinylidène aromatique et un ou plusieurs monomères copolymérisables avec lui, ledit deuxième copolymère greffé ayant une quantité de couche supérieure par centimètre carré de surface de substrat plus grande que le premier copolymère greffé ;

(d) mélanger la matrice, le premier copolymère greffé et le deuxième copolymère greffé pour former une composition mélangée,

caractérisé par le fait que ledit premier copolymère greffé a de plus de 0 à moins de 0,7 x $10^{-7}$ gramme de couche supérieure par centimètre carré de surface de substrat et le deuxième copolymère greffé a de plus de 0 à moins de 7,0 x $10^{-7}$ gramme de couche supérieure par centimètre carré de surface de substrat, et que cette quantité est d'au moins 1,5 fois plus grande que la quantité de couche supérieure greffée à un substrat de caoutchouc greffable du premier copolymère greffé.

**7.** Procédé selon la revendication 6, dans lequel le monomère monovinylidène aromatique des premier, deuxième et troisième mélanges de monomères est le styrène.

**8.** Procédé selon la revendication 6, dans lequel le monomère monovinylidène aromatique des premier, deuxième et troisième mélanges de monomères comprend du styrène et un ou plusieurs monomères copolymérisables avec lui, lesdits monomères copolymérisables étant choisis dans le groupe constitué par l'acrylonitrile et le méthacrylate de méthyle.

**9.** Procédé selon la revendication 6, dans lequel le substrat de caoutchouc greffable des premier et deuxième copolymères greffés est polymérisé à partir d'un monomère monovinylidène aromatique, d'une dioléfine conjuguée monomère, et d'un nitrile à insaturation éthylénique monomère.

**10.** Procédé selon la revendication 9, dans lequel le monomère monovinylidène aromatique est le styrène, la dioléfine conjuguée monomère est le butadiène-1,3, et le nitrile à insaturation éthylénique monomère est l'acrylonitrile.

**11.** Procédé selon l'une des revendications 6 à 10, dans lequel la composition mélangée dans la matrice est présente dans une quantité allant de 60 à 95 pour cent en poids, de préférence, de 70 à 90 pour cent en poids, sur la base du poids total de la composition mélangée, et dans lequel le premier copolymère greffé est présent dans une quantité allant de 20 à 55 pour cent en poids, sur la base du poids total des premier et deuxième copolymères greffés, et dans lequel le deuxième copolymère greffé est présent dans une quantité allant de 35 à 85 pour cent en poids, de préférence, de 45 à 80 pour cent en poids, sur la base du poids total des premier et deuxième copolymères greffés, et dans lequel la composition mélangée contient un substrat de caoutchouc greffable dans une quantité allant de 5 à 40, de préférence, de 10 à 30 pour cent en poids, sur la base du poids total de la composition mélangée, est traitée avec un cisaillement mécanique tout en étant dans un état plastifié à chaud, conduisant à une large distribution granulométrique contenant des petites particules de copolymère ayant des diamètres allant de 0,03 à 0,5 $\mu$m (300 à 5 000 Å), de préférence, de 0,08 à 0,2 $\mu$m (800 à 2 000 Å), des particules de copolymère greffé ayant un grand diamètre de particules allant de 0,5 à 10 $\mu$m (5 000 à 100 000 Å), de préférence, de 0,8 à 4 $\mu$m (8 000 à 40 000 Å).

## Patentansprüche

**1.** Gemischte Zusammensetzung, enthaltend

(a) eine ein Mischpolymer enthaltende Matrix, wobei das Mischpolymer erhältlich ist durch Polymerisieren einer ersten Monomermischung, enthaltend ein monovinylidenaromatisches Monomer und ein oder mehrere damit copolymerisierbare Monomere,

(b) einen pfropfbaren Kautschukträger aus dem ersten Pfropfcopolymer, das darauf aufgepfropft aufweist einen im wesentlichen kontinuierlichen Überbau eines Mischpolymeren, das erhältlich ist durch Polymerisation einer zweiten Monomermischung, enthaltend ein monovinylidenaromatisches Monomer und ein oder mehrere damit copolymerisierbare Monomere, und

(c) einen pfropfbaren Kautschukträger aus dem zweiten Pfropfcopolymer, das darauf aufgepfropft aufweist einen im wesentlichen kontinuierlichen Überbau eines Mischpolymeren, das erhältlich ist aus einer dritten

Monomermischung, enthaltend ein monovinylidenaromatisches Monomer und ein oder mehrere damit copolymerisierbare Monomere, wobei ein zweites Pfropfpolymer eine größere Menge Überbau pro $cm^2$ der Trägeroberfläche aufweist als das erste Pfropfcopolymer,

**dadurch gekennzeichnet,**

daß das erste Pfropfcopolymer von mehr als 0 bis weniger als 0,7 x $10^{-7}$ g Überbau pro $cm^2$ Trägeroberfläche und das zweite Pfropfcopolymer von mehr als 0 bis weniger als 7,0 x $10^{-7}$ g Überbau pro $cm^2$ Trägeroberfläche aufweist und die Menge mindestens 1,5fach größer ist als die Menge des auf den pfropfbaren Kautschukträger des ersten Pfropfcopolymeren aufgepfropften Überbaus.

**2.** Zusammensetzung nach Anspruch 1,
**dadurch gekennzeichnet,**
daß das monovinylidenaromatische Monomer der ersten, zweiten und dritten Monomermischung Styrol ist.

**3.** Zusammensetzung nach Anspruch 1,
**dadurch gekennzeichnet,**
daß die erste, zweite und dritte Monomermischung ein monovinylidenaromatisches Monomer und eine oder mehrere, damit copolymerisierbare Monomere enthält, wobei die copolymerisierbaren Monomere ausgewählt sind aus der Gruppe bestehend aus Acrylnitril und Methylacrylat.

**4.** Zusammensetzung nach Anspruch 1,
**dadurch gekennzeichnet,**
daß der pfropfbare Kautschukträger des ersten und zweiten Pfropfcopolymeren polymerisiert ist aus einem monovinylidenaromatischen Monomer, einem konjugierten Diolefinmonomer und einem ethylenisch ungesättigten Nitrilmonomer.

**5.** Zusammensetzung nach Anspruch 4,
**dadurch gekennzeichnet,**
daß das monovinylidenaromatische Monomer Styrol , das konjugierte Diolefinmonomer 1,3-Butadien und das ethylenisch ungesättigte Nitrilmonomer Acrylnitril ist.

**6.** Verfahren zum Herstellen einer gemischten Zusammensetzung nach Anspruch 1 mit den Schritten

(a) Polymerisieren einer ersten Monomermischung, enthaltend ein monovinylidenaromatisches Monomer und ein oder mehrere damit copolymerisierbare Monomere, um eine Matrix eines Mischpolymeren auszubilden,

(b) Ausbilden eines ersten Pfropfcopolymeren mit einem pfropfbaren Kautschukträger, wobei der pfropfbare Kautschukträger darauf aufgepfropft einen im wesentlichen kontinuierlichen Überbau eines Mischpolymeren aufweist, wobei das Mischpolymer polymerisiert wird aus einer zweiten Monomermischung, enthaltend ein monovinylidenaromatisches Monomer und ein oder mehrere damit copolymerisierbare Monomere,

(c) Ausbilden eines zweiten Pfropfcopolymeren mit einem pfropfbaren Kautschukträger, wobei der pfropfbare Kautschukträger darauf aufgepfropft einen im wesentlichen kontinuierlichen Überbau eines Mischpolymeren aufweist, wobei das Mischpolymer polymerisiert wird aus einer dritten Monomermischung, enthaltend ein monovinylidenaromatisches Monomer und ein oder mehrere damit copolymerisierbare Monomere, wobei das zweite Pfropfcopolymer eine größere Menge Überbau pro $cm^2$ Trägeroberfläche aufweist als das erste Pfropfcopolymer,

(d) Mischen der Matrix, des ersten Pfropfcopolymeren und des zweiten Pfropfcopolymeren, um eine gemischte Zusammensetzung auszubilden,

**dadurch gekennzeichnet,**

daß das erste Pfropfcopolymer von mehr als 0 bis weniger als 0,7 x $10^{-7}$ g Überbau pro $cm^2$ Trägeroberfläche und das zweite Pfropfcopolymer von mehr als 0 bis weniger als 7,0 x $10^{-7}$ g Überbau pro $cm^2$ Trägeroberfläche aufweist und die Menge mindestens 1,5fach größer ist als die Menge des auf den pfropfbaren Kautschukträger des ersten Pfropfcopolymeren aufgepfropften Überbaus.

**7.** Zusammensetzung nach Anspruch 6,
**dadurch gekennzeichnet,**
daß das monovinylidenaromatische Monomer der ersten, zweiten und dritten Monomermischung Styrol ist.

**8.** Zusammensetzung nach Anspruch 6,
**dadurch gekennzeichnet,**
daß das monovinylidenaromatische Monomer der ersten, zweiten und dritten Monomermischung Styrol und ein oder mehrere damit copolymerisierbare Monomere enthält, wobei die copolymerisierbaren Monomere ausgewählt sind aus der Gruppe bestehend aus Acrylnitril, Methylmethacrylat.

**9.** Zusammensetzung nach Anspruch 6,
**dadurch gekennzeichnet,**

daß der pfropfbare Kautschukträger des ersten und zweiten Pfropfcopolymeren polymerisiert ist aus einem monovinylidenaromatischen Monomer, einem konjugierten Diolefinmonomer und einem ethylenisch ungesättigten Nitrilmonomer.

**10.** Zusammensetzung nach Anspruch 9,
**dadurch gekennzeichnet,**
daß das monovinylidenaromatische Monomer Styrol, das konjugierte Diolefinmonomer 1,3-Butadien und das ethylenisch ungesättigte Nitrilmonomer Acrylnitril ist.

**11.** Verfahren nach Ansprüchen 6-10,
**dadurch gekennzeichnet,**
daß die gemischte Zusammensetzung in der Matrix vorhanden ist in einer Menge von 60-95 Gew.-%, vorzugsweise von 70-90 Gew.-%, bezogen auf Gesamtgewicht der gemischten Zusammensetzung, und wobei das erste Pfropfcopolymer vorhanden ist in einer Menge von 20-55 Gew.-%, bezogen auf Gesamtgewicht des ersten und zweiten Pfropfcopolymeren, und wobei das zweite Pfropfcopolymer vorhanden ist in einer Menge von 35-85 Gew.-%, vorzugsweise von 45-80 Gew.-%, bezogen auf Gesamtgewicht des ersten und zweiten Pfropfcopolymeren, und wobei die gemischte Zusammensetzung pfropfbaren Kautschukträger enthält in einer Menge von 5-40, vorzugsweise von 10-30 Gew.-%, bezogen auf Gesamtgewicht der gemischten Zusammensetzung, wobei die gemischte Zusammensetzung mit mechanischer Scherung verarbeitet wird, während sie in durch Wärme plastifiziertem Zustand ist, so daß eine breite Teilchengrößenverteilung erhalten wird, enthaltend kleine Copolymerteilchen mit Durchmessern von 0,03-0,5$\mu$m (300-5.000 Å), vorzugsweise von 0,08-0,2$\mu$m (800-2.000 Å), Pfropfcopolymerteilchen mit einem großen Teilchendurchmesser von 0,5-10$\mu$m (5.000-100.000 Å), vorzugsweise von 0,8-0,2$\mu$m (8.000-40.000 Å).